# FASCICULE DE BREVET EUROPEEN

(11) **EP 1 366 326 B1**
(45) Date de publication et mention de la délivrance du brevet: **02.05.2007**
(21) Numéro de dépôt: 02713007.9
(22) Date de dépôt: 05.03.2002
(51) Int. Cl.: F24D 1/00

(54) **ECHANGEUR DE CHALEUR A CONDENSATION NOTAMMENT POUR CHAUDIERE**
KONDENSIERENDER WÄRMETAUSCHER FÜR EINEN KESSEL
CONDENSATION HEAT EXCHANGER, IN PARTICULAR FOR A BOILER

(30) Priorité: 07.03.2001 FR 0103069
(43) Date de publication de la demande: 03.12.2003
(73) Titulaire: Le Mer, Joseph, 29600 Morlaix (FR); Giannoni, Rocco, 20121 Milano (IT)
(72) Inventeur: Le Mer, Joseph, 29600 Morlaix (FR); Giannoni, Rocco, 20121 Milano (IT)
(74) Mandataire: Le Faou, Daniel
(86) Numéro de dépôt international: PCT/FR2002/000780
(87) Numéro de publication internationale: WO 2002/070956

(56) Documents cités:
- EP-A- 0 945 688
- DE-A- 3 719 387

## Description

La présente invention concerne une chaudière comprenant un échangeur de chaleur, et plus particulièrement une chaudière à gaz murale, dans une installation de chauffage domestique.

D'autres applications, cependant, sont envisageables pour cet appareil.

L'objet de l'invention a pour caractéristique principale de combiner, au sein d'un même dispositif compact, un échangeur traditionnel - de type connu, généralement en cuivre ou en acier inoxydable - composé notamment d'une série de tubes parallèles emmanchés dans des plaques, ou ailettes transversales, - qu'on appellera ci-après « échangeur primaire » - avec un échangeur spécial, qu'on appellera « échangeur secondaire». Plus précisément, la série de tubes est formée de plusieurs tronçons d'un tube unique en forme de serpentin parcouru par le fluide à chauffer.

De manière classique, l'échangeur primaire est plat et affecte, vu de dessus, une forme générale rectangulaire. Il s'étend horizontalement au-dessus d'un brûleur à gaz, de telle sorte que les gaz brûlants issus de la combustion le traversent, passant de bas en haut entre les ailettes verticales et les tubes horizontaux, et réchauffant au passage l'eau circulant dans les tubes. Les gaz chauds sont confinés, entre le brûleur et l'échangeur, dans une enceinte, ou chambre de combustion, délimitée par des panneaux en tôle revêtus sur leur face interne par des plaques d'isolation thermique, par exemple en céramique.

Au-dessus de l'échangeur primaire est placé un dispositif dit « anti-refouleur ». Il s'agit d'un boîtier en tôle formant hotte d'évacuation des gaz brûlés, dont la partie supérieure comprend une manchette communiquant avec une tubulure débouchant vers l'extérieur du local, cheminée par exemple.

Dans certains dispositifs plus perfectionnés, la hotte est équipée d'un ventilateur électrique favorisant l'extraction des gaz brûlés.

Un objectif de l'invention est essentiellement de proposer un tel dispositif qui, tout en favorisant l'extraction des gaz brûlés, ait une fonction de récupération de l'énergie calorifique jusqu'ici perdue, conférant à l'échangeur un rendement amélioré, ceci avec des moyens simples et robustes, de durée de vie élevée, qui ne grèvent de manière importante ni le coût de fabrication, ni le coût de maintenance de l'appareil.

Plus précisément, l'invention se propose d'installer au-dessus dudit échangeur primaire un échangeur secondaire à condensation, à l'intérieur de la hotte, sans pour cela ni nuire à la compacité de l'ensemble, ni perturber le fonctionnement de l'échangeur primaire ou du brûleur à cause des condensats générés au sein de l'échangeur secondaire.

La chaudière faisant l'objet de la présente invention, qui peut être notamment - mais non exclusivement - une chaudière à gaz murale, dans une installation de chauffage domestique, comprend un échangeur primaire plat affectant, vu de dessus, une forme générale rectangulaire, et s'étendant horizontalement au-dessus d'un brûleur à gaz de telle sorte que les gaz brûlants issus de la combustion le traversent de bas en haut en réchauffant au passage l'eau qui y circule, et dont la partie supérieure est recouverte d'un capot à l'intérieur duquel est monté un organe de ventilation à commande électrique, apte à assurer l'aspiration et à favoriser l'évacuation des gaz brûlés et refroidis ayant traversé l'échangeur, en les refoulant vers un manchon de sortie, qui comporte, positionné au-dessus de l'échangeur primaire, et sous ledit capot, un échangeur secondaire à condensation, communiquant avec ledit échangeur primaire.

L'état de la technique en la matière est illustré par le document DE-3 719 387 A.

Cet échangeur est remarquable en ce que l'échangeur secondaire est composé d'une série de tubes de section aplatie, en regard les uns par rapport aux autres par une grande face, avec un faible espacement, formant un interstice, ces tubes étant parcourus intérieurement par l'eau froide qui se dirige vers l'échangeur primaire et étant exposés extérieurement aux gaz chauds l'ayant traversé, l'échangeur secondaire étant placé dans un bac ouvert vers le haut qui est ainsi conformé, et les tubes plats qui le composent étant ainsi positionnés, que, d'une part, les condensats liquides issus de la condensation se formant au sein de l'échangeur secondaire ne retombent pas sur l'échangeur primaire sous-jacent, ni sur le brûleur, et que, d'autre part, les gaz chauds ayant traversé l'échangeur primaire sont aspirés de bas en haut à travers les interstices séparant les tubes plats de l'échangeur secondaire par ledit organe de ventilation via des ouvertures, telles que des trous oblongs, ou lumières, ménagées dans une paroi latérale dudit bac, le fond incliné de ce dernier assurant la récupération des condensats, et leur évacuation vers un orifice de décharge.

Par ailleurs, selon un certain nombre de caractéristiques avantageuses, non limitatives de l'invention :
- lesdits tubes plats sont montés en parallèle entre des boîtiers collecteurs d'entrée et de sortie ;
- lesdits tubes plats possèdent, sur une au moins de leurs grandes faces, au moins un bossage s'appuyant contre le tube voisin pour calibrer l'espacement précité (largeur d'interstice) ;
- le plan général contenant le faisceau de tubes plats est légèrement incliné par rapport à l'horizontale dans le sens transversal, c'est à dire perpendiculairement aux tubes, d'un angle aigu dont la valeur est comprise entre 15 et 20 degrés environ.
- lesdites lumières sont ménagées dans la paroi latérale du bac qui est située du côté correspondant au côté le plus haut du faisceau de tubes, en dessous et légèrement en retrait vers l'extérieur par rapport audit faisceau ;
- la chaudière est une chaudière à gaz murale, pour une installation de chauffage domestique.

D'autres caractéristiques et avantages de l'invention apparaîtront de la description qui va maintenant en être faite, en référence aux dessins annexés, qui en représentent un mode de réalisation possible. Sur ces dessins :
- Les figures 1 et 2 sont des vues générales très schématiques, en coupe verticale, respectivement en vue de face et de côté, d'un échangeur conforme à l'invention :

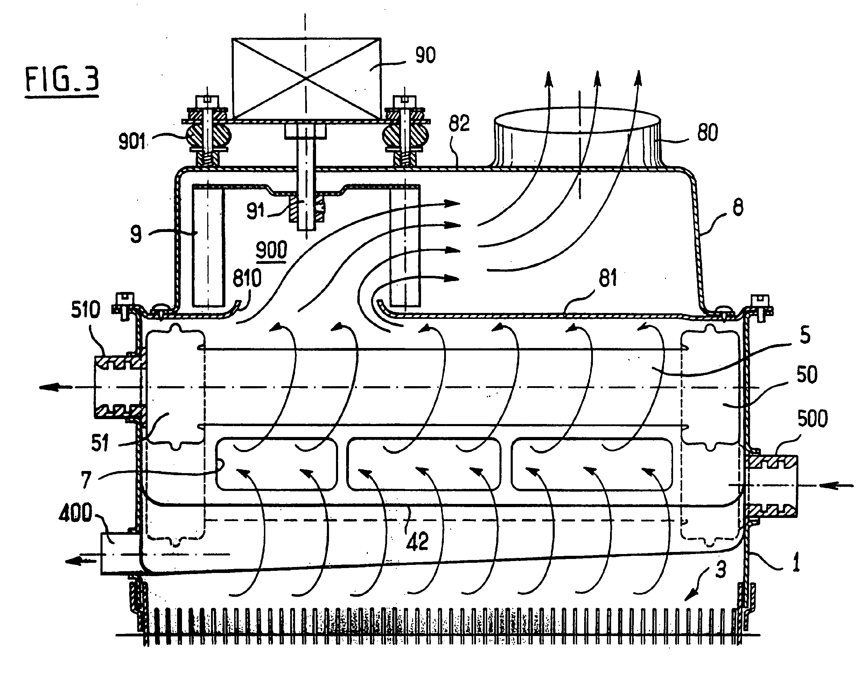

- Les figures 3 et 4 sont des vues à plus grande échelle, correspondant aux figures 1 et 2 respectivement, de l'échangeur secondaire ;
- La figure 5 est une vue en perspective de l'un des tubes plats constitutifs de l'échangeur secondaire ;
- Les figures 6 et 7 sont des vues schématiques et partielles, respectivement de côté et en bout, illustrant une structure possible du faisceau de tubes plats composant l'échangeur secondaire.

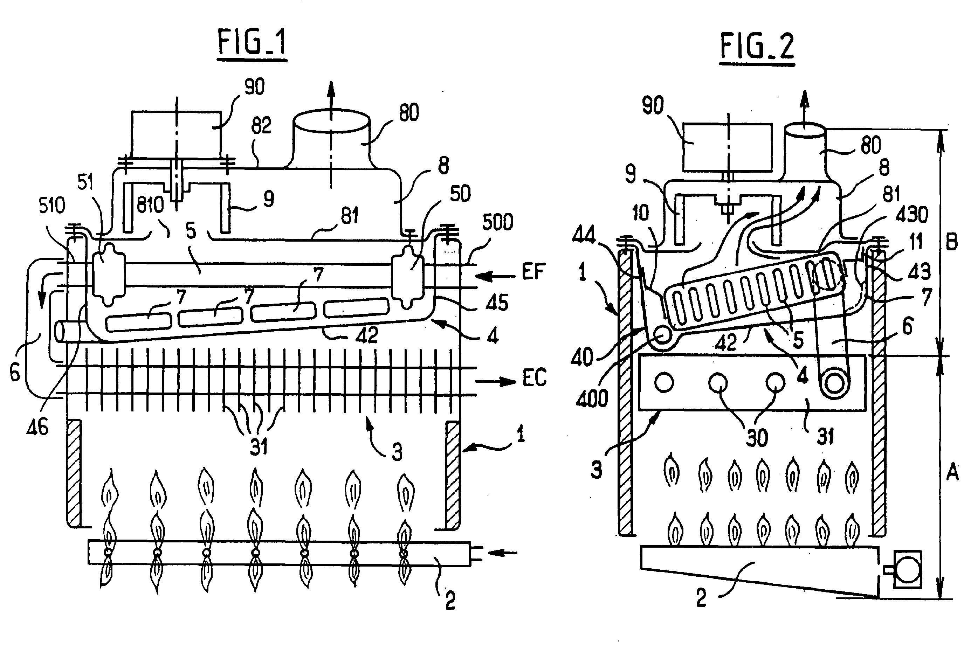

Le dispositif selon la présente invention comporte, comme on le voit plus particulièrement sur les figures 1 et 2, une enceinte 1, par exemple à paroi calorifugée, dont la partie basse **A** est occupée par l'échangeur primaire 3, situé au-dessus du brûleur à gaz 2, et la partie supérieure **B** par l'échangeur secondaire 4.

De manière classique, l'échangeur primaire 3 est constitué d'un tube en cuivre en forme de serpentin, dans lequel circule l'eau à chauffer, et dont les parties droites parallèles 30 sont disposées horizontalement et portent des ailettes transversales verticales 31, également en cuivre. Il est traversé de bas en haut par les gaz chauds produits par le brûleur 2.

Vu de dessus, l'échangeur primaire 3 a une forme générale rectangulaire. L'échangeur secondaire 4 comprend une pluralité de tubes 5 aplatis, identiques, de section approximativement rectangulaire, dont le petit côté a une dimension nettement inférieure à celle du grand côté, et dont le petit côté est arrondi (forme oblongue). Ces tubes, qui ont donc la forme de lames, sont disposés parallèlement et horizontalement, côte à côte, avec un faible écartement mutuel ; ils sont en vis à vis par leurs grandes faces. Ils sont orientés parallèlement aux tubes 30 de l'échangeur primaire 3. De préférence, et comme on le verra plus loin, cet écartement est bien défini, et constant. Le faisceau de tubes 5 est fixé, par soudage, à chacune de ses extrémités, à des boîtiers collecteurs 50, 51. Ceux-ci sont connectés de manière étanche aux tubes 5 et à des conduits d'arrivée et, respectivement de sortie, de l'eau à chauffer. L'eau passe du collecteur amont 50 au collecteur aval 51 via le faisceau de tubes 5 montés en parallèle.

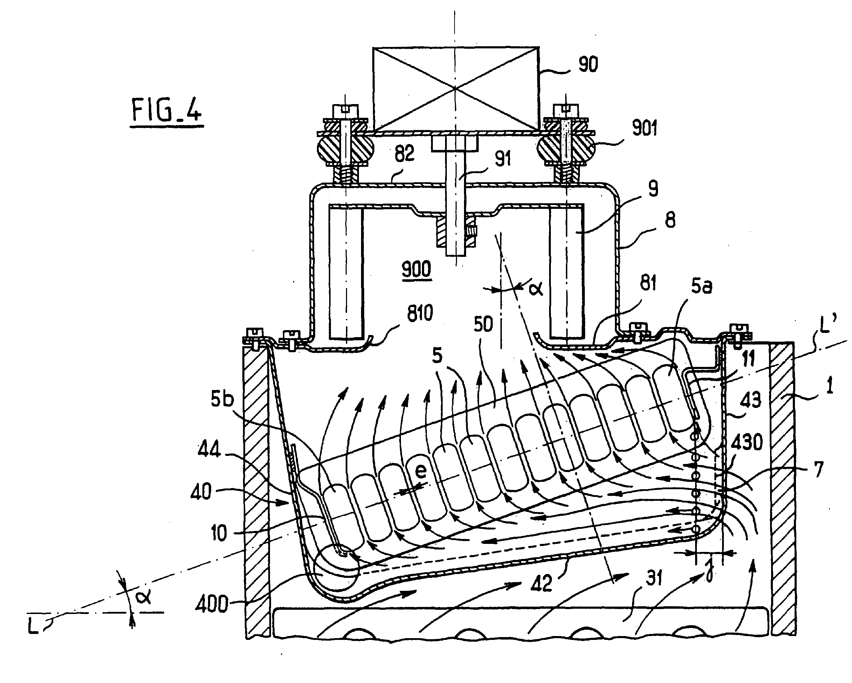

Sur la figure 4, on a désigné par la référence **L-L'** la direction du plan général contenant le faisceau de tubes 5. Ce plan n'est pas horizontal. Il est légèrement incliné par rapport à l'horizontale dans le sens transversal, c'est à dire perpendiculairement aux tubes 30 et 5. A titre indicatif, l'angle de cette inclinaison, désigné α sur la figure 4, a une valeur comprise entre 15 et 20 degrés environ.

L'échangeur secondaire 4 comporte un boîtier 40 en forme de bac, ou cuvette, à l'intérieur duquel est monté le faisceau de tubes. Ce boîtier est fermé vers le bas par un fond plat 42, mais est ouvert vers le haut. Le fond plat 42 est doublement incliné : en direction transversale, comme les tubes plats 5, mais d'un angle plus faible, par exemple de l'ordre de cinq à dix degrés, ainsi qu'en direction longitudinale, par exemple d'un angle de l'ordre de 5 degrés également. La zone la plus basse de ce fond est raccordée à un conduit 400, destiné à l'évacuation des condensats.

Le bac 40, les tubes 5 et les collecteurs 50, 51 sont par exemple en acier inoxydable. Bien entendu, le plan général des tubes en forme de lames 5 forme également le l'angle α précité par rapport à la verticale.

En partie haute, le boîtier 40 est recouvert d'un capot 8. Ce capot à la forme générale d'une cuvette retournée, à contour général ovale (vu de dessus), et dont l'ouverture est dirigée vers le bas, surplombant l'échangeur secondaire 4.

L'une des parois latérales, s'étendant parallèlement aux axes des tubes plats 5, du bac 40 est traversée par une rangée d'ouvertures allongées, ou lumières, référencées 7, dont les grands côtés sont parallèles au bord inférieur de cette paroi. Cette paroi, désignée 43, correspond au coté surélevé du fond 42. La paroi latérale opposée, de plus grande hauteur, est pleine.

Les parois frontales 45, 46, sont traversés par les tubulures d'amenée 500, et, respectivement, de sortie 510, de l'eau à l'entrée et au sortir du faisceau de tubes 5 de l'échangeur secondaire.

Les lumières 7 sont obtenue par découpage de la paroi 43, avec repoussage des bords de chaque ouverture ainsi découpée vers l'intérieur du boîtier 40, formant une collerette 430. Ces collerettes sont positionnées légèrement en retrait, vers l'extérieur (sur la gauche sur les schémas 2 et 3) par rapport au tube 5a d'extrémité du faisceau qui se trouve en vis à vis de la paroi 43. Ce décalage est référencé « j » sur la figure 4. Ces lumières 7 débouchent en dessous de ce tube d'extrémité 5a.

Des tôles déflectrices 10, 11, soudées aux parois 43, respectivement 44, sont conformées de manière à présenter des portions de paroi s'étendant vers le bas parallèlement et à faible distance des faces externes de chacun des tubes d'extrémité 5a, respectivement 5b. Cette distance est choisie égale, ou voisine, de la valeur d'interstice e de deux tubes voisins.

Le dessus du bac 40 est obturé par un couvercle en acier inoxydable 81 sur lequel est fixé, au moyen de vis par exemple, le capot 8 susmentionné.

A l'intérieur du capot 8 est montée et guidée en rotation une roue de ventilateur, telle qu'une turbine centrifuge à ailettes, de type connu, d'axe vertical 91, entraînée en rotation par un petit moteur électrique 90. Celui-ci est fixé à l'extérieur du capot 8, sur sa face supérieure horizontale 82, par l'intermédiaire d'un montage antivibratoire 901 de type connu.

Le couvercle 81 est traversé par une ouverture circulaire 810, coaxiale à la turbine 9, et présentant un rebord en forme de collerette dirigée vers le haut. Le diamètre de l'ouverture 810 correspond sensiblement au diamètre de l'espace central vide 800 situé entre les ailettes de la roue 9. Dans la paroi 82 du capot est prévue une ouverture circulaire qui débouche un manchon tubulaire vertical 80, dirigé vers le haut, qui est destiné à être raccordé à un tuyau d'évacuation des gaz brûlés.

Le manchon 80 est positionné par rapport à la roue 9 de telle manière que les gaz qui sont aspirés par la roue en rotation du bac 40 dans l'espace 900, de bas en haut à travers l'ouverture 810, soient ensuite dirigés par centrifugation vers le manchon 80, pour être évacués.

Des déflecteurs appropriés peuvent être montés à l'intérieur du capot 8 pour bien orienter, voire canaliser ce flux de gaz vers le manchon de sortie.

Le fluide à réchauffer, tel que de l'eau notamment, parcourt d'abord l'échangeur secondaire, puis l'échangeur primaire.

L'eau à réchauffer **EF** rentre dans la tubulure 500, passe dans le réseau de tubes 5, ressort par la tubulure 510, puis rejoint l'entrée de l'échangeur primaire via une tubulure ad hoc, référencée 6 sur la figure 1. L'eau réchauffée **EC** en ressort.

Le processus de chauffage fonctionne comme expliqué ci-après.

Le cheminement des gaz dans l'appareil est représenté par des lignes fléchées.

Les gaz brûlés générés par le brûleur 2, dont la température est de l'ordre de 900°C par exemple, assurent un chauffage important (chauffage principal) du liquide passant dans l'échangeur 3, et qui a été préalablement préchauffé dans l'échangeur secondaire 4.

Les gaz chauds traversent l'échangeur 3 de bas en haut, et viennent lécher le fond plat incliné 42 du bac 40. Ils sont naturellement dirigés, par suite de la pente, vers la paroi latérale 43 ; ils changent de direction, traversent les ouvertures 7 en forme de lumières, et pénètrent à l'intérieur du boîtier 40, en dessous du faisceau de tubes 5. Par suite de la pente dudit faisceau, la section de passage de ce flux de gaz chauds, dont la température est par exemple de l'ordre de 130 à 150 °C, décroît linéairement lorsqu'on s'éloigne des ouvertures 7.

Il en résulte une répartition homogène du flux, et un débit sensiblement constant de ce flux de bas en haut, à travers les interstices entre les tubes 5 et, aux extrémités, entre les tubes 5a, 5b et les tôles adjacentes 11, respectivement 10.

Au cours de ce passage, dans des couloirs étroits, le long des flancs plats et froids des tubes 5, on observe un phénomène de condensation des gaz chauds. La vapeur d'eau notamment, et d'autres gaz condensables présents dans les gaz issus de la combustion, passent en phase liquide. Ce phénomène, exothermique, provoque un réchauffement des tubes et, corrélativement, par conduction thermique à travers leur paroi, un réchauffement de l'eau qui y circule.

La circulation des gaz de bas en haut, à travers les deux échangeurs superposés est assistée par l'aspiration générée par le ventilateur 9.

Les gaz non condensés pénétrant dans l'espace 900 sont à une température de l'ordre de 40 à 50°C.

Les condensats forment de fines gouttelettes sur les flancs des tubes plats 5 et ruissellent vers le bas, pour retomber sur le fond de bac doublement incliné 42 du bac. Le liquide est ainsi amené par gravité vers l'orifice de décharge 400, par lequel il est évacué via un conduit approprié. En aucun cas ces condensats ne retombent sur l'échangeur primaire, ni sur le brûleur ; de plus, ils n'interfèrent pas avec l'entrée des gaz brûlés dans l'échangeur secondaire du fait de la position « en retrait » des lumières 7, comme cela a été exposé plus haut.

Ces condensats, par conséquent, ne perturbent aucunement le fonctionnement de l'appareil.

La turbine 9 chasse les gaz résiduels nocifs vers le manchon 80, par lequel ils sont évacués à l'extérieur.

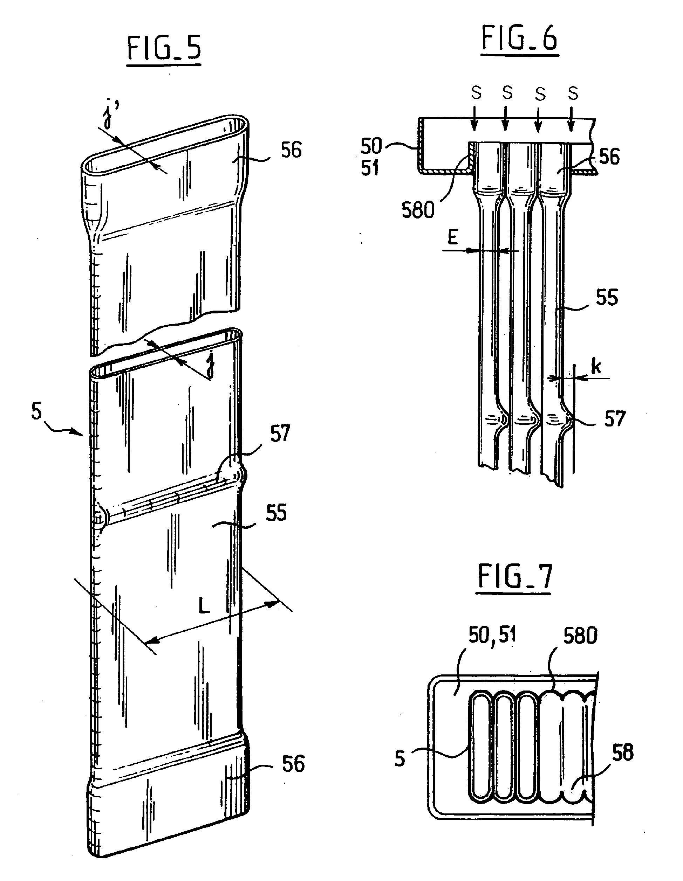

La figure 5 montre un mode de réalisation possible d'un tube plat 5.

Il possède une partie principale 55 d'épaisseur **j** inférieure à celle **j**' des deux extrémités 56. La partie principale 55 présente au moins un bossage transversal 57, de préférence disposé en région centrale, sur l'une des faces latérales du tube. Son épaisseur **k** correspond à la moitié de la différence d'épaisseur entre les parties 56 et 55 **(j'- j** /2).

L'échangeur secondaire est constitué par la mise en contact mutuel, en sandwich, de l'ensemble des tubes 5, par l'intermédiaire de leurs zones d'extrémité élargies 56 et des bossages 57, qui jouent le rôle d'entretoises, permettant d'obtenir une largeur de passage calibrée et constante entre deux tubes adjacents (voir figure 6). A titre indicatif, la largeur de passage « **e** » (= **k**) est comprise entre 0,4 et 1 mm environ. La largeur **L** des tubes est par exemple de l'ordre de 30 mm, leur épaisseur **E** de l'ordre de 4mm. Leur nombre et leur longueur dépendent de la puissance de l'appareil. Il est prévu par exemple une quinzaine de tubes de longueur comprise entre 200 et 300 mm.

Les collecteurs 50, 51 sont des boîtiers formés de deux parties (fond et couvercle) accolées et soudées l'une à l'autre ; sur les figures 6 et 7 est représentée seulement la partie « fond », qui reçoit les tubes 5. La partie «couvercle » des collecteurs 50, 51, reçoit les tubulures 500, respectivement 510, d'entrée et de sortie d'eau n'y est pas représentée.

La partie « fond » est soudés à l'une des extrémités du faisceau de tubes accolés 5. Elle possède une paroi emboutie, présentant une découpe 58 à collerette repoussée 580, dont le contour est fait de portions en arc de cercle correspondant à celui du « paquet » d'extrémités 56 qui y est emboîté. La liaison peut être réalisée par soudage laser, assurant la fusion des chants d'extrémité des tubes, entre eux et avec le chant de ladite collerette 580. Cette liaison par soudage est symbolisée par les flèches **S** sur la figure 6.

L'ajout de l'échangeur secondaire permet d'augmenter de manière significative le rendement de l'appareil, ceci par rapport à un appareil comportant uniquement un échangeur primaire, sans que cet ajout en augmente pratiquement l'encombrement, ni en affecte le fonctionnement.

## Revendications

1. Chaudière comprenant un échangeur primaire plat (3) affectant, vu de dessus, une forme générale rectangulaire, et s'étendant horizontalement au-dessus d'un brûleur à gaz (2), de telle sorte que les gaz brûlants issus de la combustion le traversent de bas en haut en réchauffant au passage l'eau qui y circule, et dont la partie supérieure est recouverte d'un capot (8) à l'intérieur duquel est monté un organe de ventilation (9) à commande électrique, apte à assurer l'aspiration et à favoriser l'évacuation des gaz brûlés et refroidis ayant traversé l'échangeur, en les refoulant vers un manchon de sortie (80), qui comporte, positionné au-dessus de l'échangeur primaire (3), et sous ledit capot (8), un échangeur secondaire à condensation (4), ce dernier étant parcouru intérieurement par de l'eau froide qui se dirige vers l'échangeur primaire (3), avec lequel il communique, et étant exposé extérieurement aux gaz chauds l'ayant traversé, cet échangeur secondaire (4) étant placé dans un bac (40) ouvert vers le haut, de telle manière que, d'une part, les condensats liquides issus de la condensation se formant au sein de l'échangeur secondaire (4) ne retombent pas sur l'échangeur primaire (3) sous-jacent, ni sur le brûleur (2), et que, d'autre part, les gaz chauds ayant traversé l'échangeur primaire (3) sont aspirés à travers l'échangeur secondaire par ledit organe de ventilation (9), le fond incliné (42) dudit bac (40) assurant la récupération des condensats, et leur évacuation vers un orifice de décharge (400), **caractérisé par le fait que** ledit échangeur secondaire est composé d'une série de tubes (5) de section aplatie, en regard les uns par rapport aux autres par une grande face, avec un faible espacement « **e** », formant un interstice, ces tubes étant parcourus intérieurement par l'eau froide qui se dirige vers l'échangeur primaire (3) et exposés extérieurement aux gaz chauds l'ayant traversé, et que l'aspiration, par ledit organe de ventilation (9), des gaz chauds ayant traversé l'échangeur primaire (3) est réalisée de bas en haut, à travers les interstices séparant les tubes plats (5) composant l'échangeur secondaire, via des ouvertures, telles que des trous oblongs, ou lumières, (7) ménagées dans une paroi latérale (43) dudit bac (40).

2. **Chaudière selon la revendication 1, caractérisé par le fait que** lesdits tubes plats sont montés en parallèle entre des boîtiers collecteurs d'entrée (50) et de sortie (51).

3. Chaudière selon la revendication 2, **caractérisé par le fait que** lesdits tubes plats (5) possèdent, sur une au moins de leurs grandes faces, au moins un bossage (57) s'appuyant contre le tube voisin pour calibrer ledit espacement «**e**».

4. Chaudière selon l'une des revendications 1 à 3, **caractérisé par le fait que** le plan général contenant le faisceau de tubes plats (5) est légèrement incliné par rapport à l'horizontale dans le sens transversal, c'est à dire perpendiculairement aux tubes (5), d'un angle aigu α, dont la valeur est comprise entre 15 et 20 degrés environ.

5. Chaudière selon la revendication 4, **caractérisé par le fait que** lesdites lumières (7) sont ménagées dans la paroi latérale (43) du bac (40) qui est située du côté correspondant au côté le plus haut du faisceau de tubes (5), en dessous et légèrement en retrait vers l'extérieur par rapport audit faisceau.

6. Chaudière à gaz murale, pour une installation de chauffage domestique, conforme à l'une au moins des revendications précédentes.

## Claims

1. A boiler comprising a flat primary heat exchanger (3) presenting a shape that is generally rectangular when seen from above, extending horizontally over a gas burner (2), such that the hot gas coming from combustion passes upwardly through it, thereby heating the water that flows therein as it passes, and having a top portion covered by a cap (8) within which there is mounted an electrically-controlled fan member (9) suitable for providing suction and for enhancing the exhaust of the burnt and cooled gas that has passed through the heat exchanger, delivering it towards an outlet sleeve (80) that includes, positioned above the primary heat exchanger (3) and under said cap (9), a condensation secondary heat exchanger (4), which heat exchanger conveys an internal flow of cold water that goes towards the primary heat exchanger (3) with which it is in communication, and is exposed externally to the hot gas that has passed therethrough, said secondary heat exchanger (4) being placed in an upwardly open vessel in such a manner that firstly the liquid condensate that results from condensation taking place within the secondary heat exchanger (4) does not fall onto the underling primary heat exchanger (3) nor onto the burner (2), and that secondly the hot gas that passed through the primary heat exchanger (3) is sucked through the secondary heat exchanger by said fan member (9), the sloping bottom (42) of said vessel (40) serving to recover the condensate, and to remove it towards a discharge orifice (400), the boiler being **characterized by** the facts that said secondary heat exchanger is made up of a series of flat-section tubes (5) facing one another via their large faces at a small spacing "e" forming interstices, said tubes conveying internally the cold water that is directed towards the primary heat exchanger (3) and being exposed externally to the hot gas that has passed through the primary heat exchanger, and that the suction by said fan member (9) of the hot gas that has passed through the primary heat exchanger (3) takes place upwards through the interstices between the flat tubes (5) making up the secondary heat exchanger towards openings such as oblong holes or slots (7) formed in a side wall (43) of said vessel (40).

2. A boiler according to claim 1, **characterized by** the fact that said flat tubes are connected in parallel between inlet and outlet manifolds (50 and 51).

3. A boiler according to claim 2, **characterized by** the fact that said flat tubes (5) possesses, on that least one of their large faces, at least one projection (57) bearing against the adjacent tube to calibrate said spacing "e".

4. A boiler according to any one of claims 1 to 3, **characterized by** the fact that the general plane containing the bundle of flat tubes (5) is slightly inclined relative to the horizontal, i.e. perpendicularly to the tubes (5), by an acute angle α of value lying in the range 15° to 20°, approximately.

5. A boiler according to claim 4, **characterized by** the fact that said slots (7) are formed in the side wall (43) of the vessel (40) that is situated on the side corresponding to the higher end of the bundle of tubes (5), beneath and set back outwards a little relative to said bundle.

6. A wall-mounting gas boiler for a domestic heating installation, in accordance with at least one of the preceding claims.

## Patentansprüche

1. Kessel mit einem Flachprimärtauscher (3), der von oben betrachtet eine allgemeine rechteckige Form aufweist und sich horizontal oberhalb eines Gasbrenners (2) derart erstreckt, dass die brennenden Gase aus der Verbrennung ihn von unten nach oben durchströmen, indem sie beim Durchzug das dort zirkulierende Wasser erwärmen, und dessen oberer Teil mit einer Haube (8) bedeckt ist, in dessen Inneren ein Entlüftungsmittel (9) mit elektrischer Steuerung montiert ist, das ausgelegt ist, die Absaugung sicherzustellen und die Entsorgung verbrannter und abgekühlter Gase, die den Tauscher durchströmt haben, zu fördern, indem es sie zu einem Ausgangsstutzen (80) zurückdrängt, der, oberhalb des Primärtauschers (3) und unterhalb der Haube (8) positioniert, einen kondensierenden Sekundärtauscher (4) umfasst, wobei dieser letztgenannte im Inneren von kaltem Wasser durchlaufen wird, das auf den Primärtauscher (3) zufließt, mit dem er in Verbindung steht, und äußerlich den warmen Gasen ausgesetzt ist, die ihn durchströmt haben, wobei dieser Sekundärtauscher (4) in einem Behälter (40) positioniert ist, der nach oben derart geöffnet ist, dass einerseits die flüssigen Kondensate aus der Kondensierung, die sich inmitten des Sekundärtauschers (4) bilden, weder auf den darunterliegenden Primärtauscher (3), noch auf den Brenner (2) zurückfallen, und dass andrerseits die warmen Gase, die den Primärtauscher (3) durchströmt haben, durch den Sekundärtauscher hindurch vom Entlüftungsmittel (9) abgesogen werden, wobei der geneigte Boden (42) des Behälters (40) die Rückgewinnung der Kondensate und ihre Entsorgung in Richtung einer Ablauföffnung (400) sicherstellt, **dadurch gekennzeichnet, dass** der Sekundärtauscher aus einer Reihe von Rohren (5) mit abgeflachtem Abschnitt gebildet ist, wobei die einen den anderen an einer großen Seite mit einer geringen Beabstandung "e" gegenüberliegen, die einen Zwischenraum bildet, wobei diese Rohre im Inneren vom kalten Wasser durchlaufen werden, das auf den Primärtauscher (3) zufließt, und äußerlich den warmen Gasen ausgesetzt sind, die ihn durchströmt haben, und dass die Absaugung durch das Entlüftungsmittel (9) der warmen Gase, die den Primärtauscher (3) durchströmt haben, von unten nach oben, durch die Zwischenräume hindurch durchgeführt wird, welche die flachen Rohre (5) trennen, die den Sekundärtauscher bilden, über Einlässe, wie längliche Löcher oder Öffnungen (7), die in einer Seitenwand (43) des Behälters (40) ausgespart sind.

2. Kessel gemäß Anspruch 1, **dadurch gekennzeichnet, dass** die flachen Rohre parallel zwischen Eingangs- (50) und Ausgangssammelgehäusen (51) montiert sind.

3. Kessel gemäß Anspruch 2, **dadurch gekennzeichnet, dass** die flachen Rohre (5) auf wenigstens einer ihrer großen Seiten wenigstens einen Buckel (57) besitzen, der sich gegen das Nachbarrohr drückt, um die Beabstandung "e" zu kalibrieren.

4. Kessel gemäß einem der Ansprüche 1 bis 3, **dadurch gekennzeichnet, dass** die Hauptebene, die das Bündel flacher Rohre (5) enthält, bzgl. der Horizontalen in der Querrichtung, das heißt senkrecht zu den Rohren (5), um einen spitzen Winkel α leicht geneigt ist, dessen Wert ungefähr zwischen 15 und 20 Grad liegt.

5. Kessel gemäß Anspruch 4, **dadurch gekennzeichnet, dass** die Öffnungen (7) in der Seitenwand (43) des Behälters (40) ausgespart sind, der auf der Seite gelegen ist, die der höchsten Seite des Rohrbündels (5) entspricht, unterhalb und leicht nach außen zurückspringend in Bezug auf das Bündel.

6. Gaswandkessel für eine Hausheizungsinstallation entsprechend wenigstens einem der vorhergehenden Ansprüche.
